# EUROPÄISCHE PATENTSCHRIFT

(11) **EP 2 729 764 B1**
(45) Veröffentlichungstag und Bekanntmachung des Hinweises auf die Patenterteilung: **11.03.2015**
(21) Anmeldenummer: 12730586.0
(22) Anmeldetag: 03.07.2012
(51) Int. Cl.: G01C 15/00, G01C 1/04, G01C 11/36, G06K 9/46, G06K 9/62, G06T 7/00

(54) **VERFAHREN ZUM BEREITSTELLEN VON ZIELPUNKTKANDIDATEN ZUR AUSWAHL EINES ZIELPUNKTS**
METHOD FOR PREPARING TARGET CANDIDATES FOR SELECTING A TARGET
PROCÉDÉ DE PRÉPARATION DE CANDIDATS DE POINTS CIBLE POUE LA SÉLECTION D'UN POINT CIBLE

(30) Priorität: 05.07.2011 EP 11172756
(43) Veröffentlichungstag der Anmeldung: 14.05.2014
(73) Patentinhaber: Hexagon Technology Center GmbH, 9435 Heerbrugg (CH)
(72) Erfinder: METZLER, Bernhard, A-6850 Dornbirn (AT); GÄCHTER TOYA, Stefan Martin Benjamin, CH-9008 St. Gallen (CH)
(74) Vertreter: Gyaja, Christoph Benjamin
(86) Internationale Anmeldenummer: PCT/EP2012/062936
(87) Internationale Veröffentlichungsnummer: WO 2013/004700

(56) Entgegenhaltungen:
- EP-A1- 2 194 399
- DE-A1- 19 922 341
- US-A1- 2006 192 946

## Beschreibung

Die Erfindung betrifft ein Verfahren zum Bereitstellen von Zielpunktkandidaten zur Auswahl eines Zielpunkts aus einer Kandidatenmenge mit einem Vermessungsgerät nach dem Oberbegriff des Anspruchs 1 und ein erfindungsgemässes Vermessungsgerät zur Ausführung des Verfahrens nach Anspruch 12.

Zum Vermessen eines Zielpunktes sind seit der Antike zahlreiche geodätische Vermessungsgeräte bekannt. Als räumliche Standarddaten werden dabei Richtung bzw. Winkel und meist auch Entfernung von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und ggf. Distanzmessfunktion, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

In vielen geodätischen Anwendungen erfolgt eine Vermessung von Punkten, indem dort speziell ausgestaltete Zielobjekte platziert werden. Diese bestehen meist aus einem Lotstock mit einem Reflektor (z.B. einem Rundum-Prisma) zur Definition der Messtrecke bzw. des Messpunktes. Bei solchen Vermessungsaufgaben werden zur Steuerung des Messvorgangs sowie zur Festlegung oder Registrierung von Messparametern eine Anzahl von Daten, Anweisungen, Sprache und weiteren Informationen zwischen Zielobjekt - insbesondere einem handhaltbaren Datenerfassungsgerät seitens des Zielobjekts - und zentralem Messgerät übertragen. Beispiele für solche Daten sind die Identifikation des Zielobjekts (Art des verwendeten Prismas), Neigung des Lotstocks, Höhe des Reflektors über Grund, Reflektorkonstanten oder Messwerte wie Temperatur oder Luftdruck. Diese Informationen bzw. situationsbedingten Parameter sind erforderlich, um eine hochpräzise Anziehung und Vermessung des durch den Lotstab mit Prisma definierten Messpunktes zu ermöglichen.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiters über eine Funkdatenschnittstelle verfügen zum Aufbau einer Funkverbindung zu externen Peripheriekomponenten wie z.B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Beispielsweise ist eine solche Visiereinrichtung eines geodätischen Vermessungsgeräts in der EP 2 219 011 beschrieben. Automatische Fokussiereinrichtungen für Zielfernrohre geodätischer Geräte sind z.B. aus der DE 197 107 22, der DE 199 267 06 oder der DE 199 495 80 bekannt.

Das optische System bzw. der optische Sichtkanal der Visiereinrichtung enthält meist eine Objektivlinsengruppe, ein Bildumkehrsystem, eine Fokussieroptik, eine Strichplatte zur Erzeugung eines Fadenkreuzes und ein Okular, die z.B. in dieser Reihenfolge von der Objektseite her angeordnet sind. Die Position der Fokussierlinsengruppe wird abhängig von der Objektentfernung so eingestellt, dass ein scharfes Objektbild auf der in der Scharfstellebene angeordneten Strichplatte entsteht. Dieses kann dann durch das Okular betrachtet oder z.B. anhand einer koaxial angeordneten Kamera erfasst werden.

Beispielhaft ist der Aufbau gattungsgemässer Zielfernrohre von geodätischen Geräten in den Veröffentlichungsschriften EP 1 081 459 oder EP 1 662 278 gezeigt.

Aufgrund des meist sowohl als Sichtkanal als auch für Messungen gemeinsam zu nutzenden Strahlengangs erfordern solche Geräte dessen technische Auslegung in der Bauweise eines Teleskops mit spezialisierten, hochpräzisen und aufwändig herzustellenden Optiken. Des Weiteren sind für die koaxiale elektronische Distanzmessung ein zusätzlicher separater Sende- und Empfangskanal sowie eine zusätzliche Bildebene für die Wellenlänge des Distanzmessers vorgesehen.

Da Zielobjekte (z.B. die für geodätische Zwecke meist verwendeten Lotstäbe mit Zielmarke wie einem Rundum-Prisma) anhand der Visiereinrichtung trotz der oft bereitgestellten 30-fachen optischen Vergrösserung mit blossem Auge genügend präzise angezielt werden können (d.h. nicht geodätischen Genauigkeitsanforderungen entsprechend), weisen gängige Vermessungsgeräte inzwischen standardmässig eine automatische Zielverfolgungs-Funktion für als Ziel-Reflektor dienende Prismen (ATR: "Automatic Target Recognition") auf. Dafür sind gängigerweise eine weitere separate ATR-Lichtquelle - z.B. ein Multimodefaserausgang, die optische Strahlung mit einer Wellenlänge im Bereich von 850 nm emittiert - und ein spezieller, für diese Wellenlänge sensitiver ATR-Detektor (z.B. CCD-Flächensensor) zusätzlich im Teleskop integriert.

Im Rahmen der ATR-Feinanzielfunktion wird dabei in Richtung der optischen Zielachse der Visiereinrichtung der ATR₋ Messstrahl emittiert, dieser wird am Prisma retroreflektiert und der reflektierte Strahl vom ATR-Sensor erfasst. Je nach Abweichung der Ausrichtung der optischen Zielachse vom Prisma weicht dabei auch die Auftreffposition der reflektierten Strahlung auf dem ATR-Sensor von einer zentralen Sensorflächenposition ab (d.h. der Reflexfleck des am Prisma retro-reflektierten ATR-Messstrahls auf dem ATR-Flächensensor liegt nicht im Zentrum des ATR-Flächensensors und trifft somit nicht auf einer Soll-Position auf, die z.B. anhand Kalibrierung als jene mit der optischen Zielachse korrespondierende Position festgelegt wurde).

Ist dies der Fall, so wird motorisiert die Ausrichtung der Visiereinrichtung derart geringfügig nachgestellt, dass der am Prisma retro-reflektierte ATR-Messstrahl hochpräzise im Zentrum der Sensorfläche auf dem ATR-Flächensensor auftrifft (d.h. die Horizontal- und Vertikalwinkel der Visiereinrichtung werden derart iterativ geändert und angepasst, bis das Zentrum des Reflexflecks mit der Soll-Position auf dem ATR-Flächensensor zusammenfällt). Alternativ kann eine Rest-Abweichung zwischen Auftreffpunkt des retro-reflektierten ATR-Messstrahls auf dem ATR-Flächensensor und dem Zentrum der Sensorfläche auch rechnerisch berücksichtigt und in einen Winkel umgewandelt werden, der zu dem - anhand der Winkelsensoren erfassen Raumwinkel, in den die Zielachse zeigt, entsprechend addiert wird. D.h., der Raum-Winkel zum Zielpunkt kann in diesem Fall auch abgeleitet werden aus dem - anhand der Winkelsensoren erfassten - Raumwinkel der Zielachse and einer Ablage des detektierten ATR-Messstrahl-Reflexes vom Sensorzentrum (d.h. von jenem zentralen Punkt auf dem ATR-Sensor, an dem die Zielachse abgebildet wird).

Dadurch kann die erzielbare Genauigkeit bei der Ausrichtung der optischen Zielachse auf das Prisma gegenüber einer manuell erfolgenden Anzielung mit Fadenkreuz und basierend auf blossem Augenmass deutlich erhöht werden. Zur Sicherstellung des Funktionierens der automatischen Anzielung basierend auf Auswertung der Position des Reflexflecks des am Prisma retro-reflektierten ATR-Messstrahls auf dem ATR-Flächensensor ist es erforderlich, vor Funktionsstart die Visiereinrichtung zumindest derart ungefähr auf den Ziel-Reflektor auszurichten, dass der retro-reflektierte ATR-Messstrahl auch auf dem ATR-Flächensensor auftrifft. Dafür kann z.B. zuvor eine manuelle Anzielung des Ziel-Reflektors basierend auf Augenmass erfolgen oder eine automatische Grobanzielfunktion ausgeführt werden.

Das manuelle, grobe Anvisieren des Zielobjekts kann benutzerseitig zum einen erfolgen, indem das Zielobjekt auf einem Benutzerdisplay der Anzeige-Steuereinheit direkt am Vermessungsgerät oder auf dem Display eines separaten Peripheriegerätes (z.B. Datenlogger als Fernsteuerung) betrachtet und angezielt wird. Oft erfolgt dies jedoch nach wie vor mittels Betrachten des Ziels durch das Okular des Zielfernrohrs (d.h. der Visiereinrichtung), da im praktischen Einsatz - z.B. bei Sonneneinstrahlung - ein angezeigtes Display-Bild auf der Anzeige-Steuereinheit bzw. dem Datenlogger ungenügend erkennbar sein kann.

Neben der ATR-Feinanzielfunktion kann auf ähnliche Weise und unter Verwendung derselben ATR-Komponenten (wie ATR-Lichtquelle und ATR-Detektor) auch eine automatische Zielverfolgungs-Funktionalität bereitgestellt sein. Nach erfolgter ATR-Feinanzielung (d.h. nachdem die Visiereinrichtung derart auf das Ziel ausgerichtet ist, dass das Zentrum des ATR-Messstrahlungs-Reflexfleck mit der - mit der Zielachse korrespondierenden - Soll-Position auf dem ATR-Flächensensor zusammenfällt) kann dann die Anvisiereinrichtung weiterhin derart Bewegungen des Zieles "live" und entsprechend schnell nachgeführt werden, dass das Zentrum des ATR-Messstrahlungs-Reflexfleck weiterhin möglichst genau und stets auf der Soll-Position auf dem ATR-Flächensensor bleibt. Es wird dann oft davon gesprochen, dass das Ziel "eingelockt" ist. Probleme können hierbei auftreten, wenn sich das Ziel derart ruckartig und schnell bewegt, dass es aus dem Sichtbereich des ATR-Detektors verschwindet (d.h. keine am Ziel reflektierte ATR-Messstrahlung mehr auf dem ATR-Flächensensor auftrifft).

Z.B. wird in der EP 2 141 450 ein Vermessungsgerät mit Funktion zur automatischen Anzielung eines retroreflektierenden Ziels sowie mit automatischer Zielverfolgungsfunktionalität beschrieben. Um dabei auch bei schnellen und ruckartigen Bewegungen das Ziel im "eingelockten" Zustand zu halten und nicht zu aus dem Sichtbereich des Feinanziel-Detektors zu verlieren, wird vorgeschlagen parallel durch eine (im sichtbaren Wellenlängenbereich sensitive) Kamera Bilder des Ziels aufzunehmen und anhand von Bildverarbeitung Bewegungen des Ziels (bzw. Bewegungen von sich zusammen mit dem Ziel mitbewegenden Objekten) zu verfolgen, und dadurch im Falle eines Verlierens des Ziels aus dem "eingelockten" Zustand das Wiederauffinden und Wiedereinlocken des RetroReflektors zu erleichtern.

Des Weiteren sind aus dem Stand der Technik Verfahren bekannt, wobei mithilfe eines Bildes und Bildverarbeitung (insbesondere anhand einer im aufgenommenen Bild bestimmten Position eines Ziel-Objekts und abhängig von einer bekannten oder dabei erfassten Bildaufnahmerichtung) die Raumwinkel vom Messgerät zum Ziel-Objekt ermittelt werden. Derartige Verfahren sind z.B. in der WO 2005/026767 oder in der WO 2006/053837 beschrieben.

Zudem wird in der Europäischen Patentanmeldung EP 2 405 236 A1 ein motorisiertes und automatisches Ausrichten einer Anzieleinrichtung eines Vermessungsgeräts auf einen Zielpunkt einer (retroreflektorlosen) Zielmarke beschrieben. Die Zielmarke (oder ein Satz von unterschiedlichen Zielmarken) ist dabei vorbekannt und weist eine zur Indikation des Zielpunktes auf der Zielmarke geeignete Struktur/Gestalt (Muster, Form, etc.) auf. Mittels einer Auswerteeinheit wird in einem erfassten Bild die Zielmarke anhand des Musters erkannt und die Position der abgebildeten Zielmarke im Bild hochpräzise bestimmt. Abhängig von dieser bestimmten Position der Zielmarke bzw. eines mit der Zielmarke in Übereinstimmung gebrachten Musters im Bild kann die Anzieleinrichtung nun präzise ausgerichtet werden.

Ein Nachteil bei Vermessungsgeräten nach dem Stand der Technik ist einerseits das gegebene Erfordernis einer manuellen Feinausrichtung der Anzieleinrichtung auf einen Zielpunkt. Dies kann sich einschränkend auf die Genauigkeit bei der Messung der Raumwinkel auswirken, da dieser Vorgang abhängig von der Sorgfalt und Fähigkeit des Benutzers ist. Weiters ist mit dem manuellen, genauen Anzielen eines Zielpunkts ein gewisser Zeitaufwand verbunden, welcher sich negativ auf die Produktivität des Benutzers auswirkt.

Andererseits ist die automatische Feinanzielung bei Vermessungsgeräten nach dem Stand der Technik auf definierte Ziele limitiert. So funktioniert die beschriebene ATR-Feinanzielfunktion nur auf kooperative Ziele, wie z.B. Prismen, und nicht auf natürliche Zielpunkte. Andere Methoden der automatischen Feinanzielung funktionieren nur auf definierte Muster, z.B. auf Zielmarken deren Formen dem System bekannt sind und nicht auf Objekte, die eine gewisse Variabilität in ihrer Gestalt aufweisen, z.B. Kirchtürme.

Es ist daher Aufgabe der vorliegenden Erfindung, ein Verfahren bereitzustellen, mit welchem eine Auswahl eines gewünschten Zielpunkts mit einem hohen Automatisierungsgrad, weniger aufwändig, schneller und zuverlässiger durchführbar ist. Eine weitere Aufgabe der Erfindung ist es, bei der Auswahl eine Variabilität möglicher Zielobjekttypen, insbesondere hinsichtlich ihrer Gestalt, berücksichtigbar zu machen. Eine spezielle Aufgabe der Erfindung ist es, bei der Auswahl des gewünschten Zielpunkts dem Zielpunkt zugeschriebene Eigenschaften, insbesondere zur Unterstützung des Auswählens, berücksichtigbar zu machen. Eine weitere Aufgabe ist das Bereitstellen eines geodätischen Vermessungsgeräts für ein solches Verfahren.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Erfindungsgemäss wird eine Methode zur Bereitstellung von Zielpunktkandidaten zusammen mit jeweils einem Indikator für eine Gewichtung der Kandidaten oder einer Zielpunktwahrscheinlichkeit bereitgestellt.

Dabei wird nach einer Grobausrichtung einer Anzieleinheit, insbesondere eines Fernrohrs eines Vermessungsgeräts mit einer integrierten Kamera ein Bild aufgenommen, welches basierend auf Methoden der digitalen Bildverarbeitung hinsichtlich möglicher Zielobjekte bzw. Zielobjektkandidaten analysiert wird. Aus den Zielobjekten bzw. Zielobjektkandidaten werden Zielpunkte bzw. Zielpunktkandidaten abgeleitet. Die ermittelten Zielpunktkandidaten können zusammen mit einer zugehörigen Wahrscheinlichkeit als vom Benutzer gewünschter Zielpunkt in Frage zu kommen, z.B. auf einem Display, bereitgestellt werden. Aus der Menge der bereitgestellten Kandidaten kann das System automatisch einen Punkt als gewünschten Zielpunkt auswählen oder bei Mehrdeutigkeit eine vordefinierte Anzahl der Kandidaten, insbesondere jene mit der höchsten Wahrscheinlichkeit, einem Benutzer diese zur manuellen Selektion anbieten. Nach der automatischen oder manuellen Auswahl kann basierend auf der Bildinformation die Abweichung der Anzieleinheit von der Richtung zum ausgewählten Zielpunkt berechnet und das Vermessungsgerät mittels zum Schwenken vorgesehener Antriebe auf den Zielpunkt ausgerichtet werden.

Das erfindungsgemässe Verfahren zum Bereitstellen von eine Kandidatenmenge bildende Zielpunktkandidaten zur Auswahl eines Zielpunkts aus der Kandidatenmenge erfolgt mit einem geodätischen Vermessungsgerät, wobei das Vermessungsgerät eine eine Anzielrichtung definierende Anzieleinheit und eine im Wesentlichen in Anzielrichtung ausgerichtete Kamera aufweist. Das Vermessungsgerät wird dabei grob auf den Zielpunkt ausgerichtet und ein Bild in Anzielrichtung wird erfasst.

Die Kamera des Vermessungsgeräts kann dabei einen zweiten Strahlengang und somit z.B. eine Erfassungsrichtung definieren, welche nicht koaxial oder absolut parallel zum Strahlengang der Anzieleinheit ist. Beispielsweise weist die Kamera und deren Optik einen Vergrösserungsfaktor auf, der kleiner als derjenige der Anzieleinheit ist, um z.B. ein Übersichtsbild zur Orientierung aufnehmen zu können, und ist daher versetzt, insbesondere unterhalb, zu einer Anzieloptik angeordnet. Damit muss die Ausrichtung der Kamera nicht mit der Ausrichtung der Anzieleinheit übereinstimmen, die Kamera kann aber im Wesentlichen in Anzielrichtung ausgerichtet sein, d.h. beispielsweise derart dass ein durch die Anzieleinheit anzielbarer Zielpunkt im Erfassungsbereich der Kamera liegt.

Weiters erfolgt ein Suchvorgang nach bestimmten Zielobjektkandidaten im erfassten Bild mittels Bildverarbeiten, insbesondere mittels eines Klassifizierungsverfahrens, wobei der Suchvorgang auf Basis vordefinierter Modelle erfolgt und den Zielobjektkandidaten jeweils zumindest ein den jeweiligen Zielobjektkandidaten repräsentierender Punkt als Zielpunktkandidaten zugeordnet wird. Zudem werden die Zielpunktkandidaten zu einer Kandidatenmenge zugeordnet und zu den Zielpunktkandidaten wird jeweils ein Gewichtswert, insbesondere eine Wahrscheinlichkeit, in Abhängigkeit von mindestens einer Ausprägung von einer vorbestimmten Zielpunkteigenschaft des Zielpunktkandidaten abgeleitet und zugeordnet. Ferner werden die Zielpunktkandidaten der Kandidatenmenge jeweils zusammen mit einer den dem jeweiligen Zielpunktkandidaten zugeordneten Gewichtswert repräsentierenden Information bereitgestellt.

Insbesondere kann zumindest ein Zielobjektkandidat bereitgestellt werden, wodurch implizit auch ein dem Objekt zugeordneter Zielpunkt, insbesondere für ein Anzielen dieses Punktes, bereitgestellt wird. So kann z.B. einem Benutzer oder dem System eine Information darüber angeboten werden, welche Zielpunkte und/oder Zielobjekte jeweils mit welcher Wahrscheinlichkeit als Zielpunkt in Frage zu kommen erkannt wurden, und darüber hinaus objektbasiert und/oder punktbasiert eine entsprechende Auswahl vorgenommen werden. Das Bereitstellen von Zielobjekten entspricht damit im Sinne der Erfindung einem gleichzeitigen Bereitstellen eines dem Zielobjekt zugeordneten Zielpunkts und kann so ebenfalls als ein Bereitstellen von Zielpunkten verstanden werden. So kann ein Bereitstellen eines Zielpunkts oder von Zielpunktkandidaten sowohl durch einzelne Punkte als auch durch definierte Strukturen, beispielsweise Objekte, realisiert sein.

Somit erfolgt ein Suchvorgang nach Zielobjektkandidaten im erfassten Bild, wobei das Bild hinsichtlich des Auftretens von Vertretern von vordefinierten Zielobjektklassen untersucht wird. Werden im Bild ein oder mehrere Zielobjektkandidaten gefunden, werden für diese die entsprechenden Zielpunkte bestimmt bzw. zugeordnet und diese basierend auf definierten Gewichtsfaktoren hinsichtlich einer Wahrscheinlichkeit bzw. eines Gewichtswerts bewertet, inwieweit es sich bei den einzelnen Kandidaten um einen vom Benutzer gewünschten Zielpunkt handelt. Nach erfolgter Auswahl können entsprechend des selektierten Zielpunktkandidaten eine Winkelablage von der aktuellen Zielrichtung ermittelt und die Ausrichtung z.B. eines Fernrohrs einer Totalstation über eine Motorisierung entsprechend der Ablage korrigiert werden.

Als Gewichtswert wird hier eine Grösse verstanden, welche angibt, inwiefern ein Zielpunktkandidat als gewünschter Zielpunkt in Frage kommt. Dieser Gewichtswert kann ferner als Wahrscheinlichkeit aufgefasst werden, wobei angegeben werden kann mit welcher Wahrscheinlichkeit ein Zielpunktkandidat als Zielpunkt in Frage kommt.

Mit anderen Worten handelt es sich bei dem Gewichtswert um ein Mass für eine Relevanz, beispielsweise um einen Relevanzwert, der eine Information, als gewünschter Zielpunkt in Frage zu kommen, zu einem jeweiligen Zielpunktkandidaten darstellt. Insbesondere kann dabei auch ein Einschlägigkeitskennwert als Gewichtswert verstanden werden, wobei der Einschlägigkeitskennwert eine skalierbare Kenngrösse dafür darstellt, inwieweit ein Zielpunktkandidat den gewünschten Zielpunkt darstellt.

Mit anderen Worten kann hinsichtlich des Gewichtswerts davon gesprochen werden, inwiefern ein dem Zielpunktkandidat zugeordneter Wert eine Zielpunktsignifikanz widerspiegelt, d.h. eine Signifikanz dafür angibt, dass ein Zielpunktkandidat den gewünschten Zielpunkt repräsentiert.

Die Bestimmung bzw. Zuordnung der Zielpunkte basierend auf den Zielobjekten kann dabei regelbasiert erfolgen, d.h. wird ein Vertreter einer Zielobjektklasse im Bild gefunden, können die Zielpunkte als Schnittpunkte von Linien oder als Mittelpunkte von Kreisen oder Ellipsen definiert sein. So kann z.B. bei einem Vertreter der Zielobjektklasse "Kirchturm" ein Zielpunkt als Schnittpunkt der Balken (im erfassten Bild als Linien erkannt) des Kreuzes und ein weiterer Zielpunkt als Mittelpunkt des Knaufs (im erfassten Bild als Kreis erkannt) abgeleitet werden. Diese Regeln zur Ableitung der Zielpunkte können der jeweiligen Zielobjektklasse zugeordnet und auf dem Vermessungsgerät gespeichert sein.

Mit einem derartigen Verfahren wird es einem Benutzer ermöglicht, in einer Messumgebung einen gewünschten Zielpunkt aus einer Menge bereitgestellter Zielpunktkandidaten, auszuwählen. Alternativ dazu kann der Zielpunkt automatisch im Rahmen des Verfahrens ausgewählt werden. Dadurch kann nach einer Grobausrichtung eines Vermessungssystems automatisch ein Zielpunkt ausgewählt werden und das System automatisch ausgerichtet werden. Falls eine automatische Zielpunktauswahl aufgrund von Mehrdeutigkeiten nicht gelingt, können dem Benutzer z.B. die wahrscheinlichsten Zielpunktkandidaten zur manuellen Auswahl angeboten werden. Damit kann die nach der manuellen Grobanzielung aufwändige Feinanzielung automatisch erfolgen und die Produktivität eines Messvorgangs gesteigert werden.

Zum Bereitstellen der Zielpunktkandidaten, wird ein Bild einer Messumgebung erfasst, wobei beim Erfassen des Bildes das Vermessungsgerät mit der Kamera, z.B. eine Totalstation oder ein Theodolit, derart ausgerichtet ist, dass der gewünschte Zielpunkt grob angezielt wird und damit die Erfassungsrichtung der Kamera im Wesentlichen auf diesen Punkt ausgerichtet ist und sich dieser somit im Bildfeld der Kamera befindet. Das erfasste Bild wird hinsichtlich des Auftretens von Zielobjektkandidaten untersucht, wobei hierfür aus der Bildverarbeitung zahlreiche Verfahren, insbesondere Klassifizierungsverfahren, bekannt sind. Zum einen können aus einem Bildausschnitt Merkmale extrahiert werden, welche in einem Merkmalsvektor zusammengefasst werden können (z.B. Haar-Wavelet oder HOG-Featüres). Dieser Merkmalsvektor kann in den Merkmalsraum abgebildet werden und je nach Lage in diesem Raum einer Zielobjektklasse zugeordnet werden. Die Auswahl des Bildausschnitts kann dabei durch ein Fenster definierter Grösse erfolgen, welches sukzessive z.B. zeilenweise über das gesamte Bild geschoben bzw. gerastert wird (Sliding Window).

Weiters kann zur Definition der Bildausschnitte das Bild hinsichtlich des Auftretens von markanten Strukturen, den so genannten "Interest-Points", z.B. mittels Förstner Operator, Harris-Laplace Detektor und/oder Harris Ecken- und Kantendetektor, analysiert werden. Somit können im Bild markante Strukturen lokalisiert werden, deren Umgebungen wiederum einen bestimmten Bildausschnitt definieren können, auf dessen Basis der Merkmalsvektor berechnet wird.

Derartige "Interest-Points" können beispielsweise auch von einem Subsystem, z.B. einer ATR-Einheit (automatische Zielerkennung) zur Verfügung gestellt werden, wobei mittels einer zusätzlichen Strahlquelle die Positionen z.B. reflektierender Ziele erfasst und diese angezielt werden können. Durch eine folgende Bildanalyse der Umgebung eines "ATR-Interest-Points" kann somit die Robustheit der ATR-Funktion hinsichtlich einer Unterscheidung zwischen ATR-Zielen und Nicht-ATR-Zielen verbessert werden. Dabei kann z.B. die Bildumgebung nach Strukturen untersucht werden, welche einen Retroreflektor repräsentieren können.

Als weitere Variante zur Definition der Bildausschnitte, aus denen die Merkmalsvektoren berechnet werden, kann basierend auf den Koordinaten bekannter Zielpunkte, z.B. von Festpunkten aus amtlicher Vermessung, entsprechend der Position und Ausrichtung der Kamera, deren Position im Bild berechnet werden. Der Bildausschnitt kann in diesem Fall durch eine vordefinierte Umgebung um diese Position definiert sein.

So kann zum Beispiel jeder Merkmalsvektor dabei einem Klassifikator zugeführt werden. Mittels des Klassifikators kann eine Zugehörigkeit des jeweiligen Merkmalvektors zu einer vordefinierten Klasse bestimmt und dessen Zuordnungswahrscheinlichkeit bzw. Merkmalswahrscheinlichkeit, d.h. die Qualität der Zuordnung, ermittelt werden.

Einer weiteren Methode zur Detektion von Zielobjekten in einem aufgenommenen Bild folgend kann dieses wiederum nach "Interest-Points" durchsucht werden. Diese "Interest-Points" definieren die Lage der Bildausschnitte aus denen Merkmalsvektoren (z.B. SIFT oder SURF) generiert werden. Im Rahmen der Klassifikation werden die Positionen der "Interest-Points" in Kombination mit den berechneten Merkmalsvektoren mit im System gespeicherten, den Zielobjektsklassen entsprechenden, Objektmodellen verglichen und deren Zugehörigkeit bewertet.

Ferner kann das Bild auch nach geometrischen Primitiven, wie z.B. Kreisen, Ellipsen oder Linien z.B. mittels Hough-Transformation durchsucht werden. Basierend auf den Nachbarschaftsbeziehungen der detektierten Primitiven kann ein Topologiegraph des Bildes aufgebaut werden, welcher im Rahmen einer Klassifikation nach verschiedenen, einzelnen Zielobjektklassen entsprechenden und gespeicherten Referenz-Graphenstrukturen durchsucht wird.

Aus einer Klassifikation der Zielobjektkandidaten bezüglich ihrer Zugehörigkeit zur Kandidatenmenge, d.h. ob es sich bei dem im Bild detektierten Objekt um ein mögliches Zielobjekt handelt oder nicht, kann sich neben der Zuordnung zu einer Zielobjektklasse auch noch eine Zuordnungswahrscheinlichkeit ergeben, welche die Güte der jeweiligen Zuordnung beschreibt.

Mit einer derartigen Klassifizierung kann somit nicht nur über eine Berücksichtigung eines erkannten möglichen Zielobjekts entschieden werden, d.h. Zielpunkt oder nicht Zielpunkt, sondern auch eine weitere detaillierte Unterteilung möglicher Zielobjekte (und der zugehörigen Zielpunkte) in unterschiedliche Klassen, z.B. Rundprisma oder Hauskante, erfolgen. Diese Klasseneinteilung und die Zuordnungswahrscheinlichkeit können weiter für eine Ermittlung des Gewichtswerts bzw. der Wahrscheinlichkeit, dass der jeweilige Zielpunktkandidat den vom Benutzer gewünschten Zielpunkt repräsentiert, berücksichtigt werden bzw. in die Berechnung dieser Wahrscheinlichkeit bzw. Gewichtung einfliessen.

Der Klassifikator kann im Rahmen des Verfahrens trainiert bzw. kann auf Basis von Trainingsbildern erstellt werden und/oder bereits gespeichert vorliegen. Der Klassifikator kann dafür anhand einer Menge von Trainingsbildern bzw. Bildausschnitten, welche die verschiedenen Klassen an Zielpunkten genügend repräsentieren, erstellt werden. Insbesondere können die Trainingsbilder aus einer ersten Menge an Bildausschnitten bestehen, welche echte Zielpunkte darstellen und dessen Zielpunktklasse bekannt ist, und aus einer zweiten Menge an Bildern von ähnlichen, aber unerwünschten Zielpunkten sowie Bildern vom Hintergrund der Zielpunkte, die einer Restklasse bzw. Nicht-Zielpunktklasse zugeordnet werden. Diese Trainingsbilder können während unterschiedlicher Tageszeiten und unter verschiedenen Mess- und Witterungsbedingungen aufgenommen werden, um ein möglichst robustes Bewertungsverfahren zu erzeugen.

Für das Trainieren des Klassifikators kann abhängig vom Verfahren aus jedem Trainingsbild in einem vordefinierten Bildbereich ein Merkmalsvektor oder ein Topologiegraph extrahiert werden. Ein Merkmalsvektor kann aus einer Kombination von verschiedenen geometrischen und statistischen Deskriptoren bestehen, die den Bildinhalt eindeutig und unabhängig von Grössenverhältnissen und Orientierung beschreiben. Die Merkmalsvektoren aller Trainingsbilder können in einen Merkmalsraum überführt werden und dort entsprechend der für die Zielobjektklasse typischen Merkmale eine bestimmte Position einnehmen. Der Merkmalsraum kann nun mit Hilfe eines, insbesondere maschinellen, Lernverfahrens, wie zum Beispiel dem maximalen Abstandsverfahren (Support Vector Machine), so in Bereiche unterteilt werden, dass jede Klasse einen möglichst grossen Raum beansprucht ohne dabei mit einer anderen Klasse zu überlappen. Der Merkmalsraum kann zudem in einen höher dimensionalen Raum transformiert werden, um das Lernen zu vereinfachen. Ausserdem kann die Dimension des Merkmalsraums verkleinert werden, zum Beispiel mittels Hauptkomponentenanalyse (Principal Component Analysis), um statistisch nicht relevante Information zu unterbinden und so das Trainieren des Klassifikators effizienter zu machen. Zusätzlich kann für jede Klasse eine Funktion gelernt werden, die einen Zusammenhang zwischen gegebenem Merkmalsvektor und dessen Zuordnungswahrscheinlichkeit herstellt. Diese Funktionen können zum Beispiel mittels logistischer Regression gelernt werden.

Insbesondere können beim Lernen geometrische Primitive in definierten Bildausschnitten detektiert und aus diesen ein Topologiegraph aufgebaut werden. So können zu je einer Zielobjektklasse entsprechende Referenz-Graphenstrukturen erzeugt werden und für die Klassifikation, insbesondere für ein "Graph Matching", gespeichert werden.

Erfindungsgemäss kann der Suchvorgang in Abhängigkeit eines Bewertens, insbesondere mittels Klassifizierens, eines Zielobjektmerkmals des jeweiligen Zielobjektkandidaten erfolgen, insbesondere wobei Typ und/oder Umgebung des Objekts und/oder Grauwert, Grauwertgradient und/oder Histogramm einer Zielpunktumgebung und/oder geometrischer Primitive und/oder deren Nachbarschaftsbeziehungen bewertet werden.. Ferner kann das Bewerten des Zielobjektmerkmals in Abhängigkeit von die Zielobjektkandidaten repräsentierenden und/oder zielobjektähnlichen Bildern, insbesondere Bildausschnitten, erfolgen. Weiters können eine Merkmalsausprägung des Zielobjektmerkmals und ein Ausprägungskoeffizient bestimmt werden, insbesondere wobei die Merkmalsausprägung und der Ausprägungskoeffizient in Abhängigkeit einer Lage eines jeweiligen Merkmalvektors in einem Merkmalsraum bestimmt werden, insbesondere wobei eine Zuordnungswahrscheinlichkeit bestimmt wird.

Konnten im Bild potentielle Zielobjekte, d.h. Vertreter ein oder mehrerer Zielobjektklassen, z.B. mittels einer vorgenannten Methode gefunden werden, können aus diesen jeweilige Zielpunktkandidaten abgeleitet werden. Jedem möglichen Zielpunkt kann ein Gewichtswert bzw. Wahrscheinlichkeit zugeordnet werden, wobei diese Wahrscheinlichkeit als Mass dafür steht, inwiefern der jeweilige Zielpunktkandidat den, insbesondere vom Benutzer, gewünschten Zielpunkt repräsentiert. Eine derartige Bewertung kann auf vordefinierten Gewichtsfaktoren basieren.

Die Gewichtsfaktoren können z.B. von der Zuordnungswahrscheinlichkeit, d.h. der Qualität der Klassifizierung, abhängen und/oder abhängig von der dem Zielpunktkandidaten zu Grunde liegende Zielobjektklasse entsprechend der Häufigkeit deren Auftretens in einer Messumgebung abgeleitet sein. Ferner kann der Gewichtsfaktor vom Abstand des Zielpunktkandidaten zum Bildzentrum abhängen. Zudem kann entsprechend des Auswahlverhaltens eines Benutzers oder des laufenden Messprogramms ein Gewichtsfaktor bestimmt werden.

Die Zielpunktkandidaten können dann zusammen mit einer Information, die ihre jeweilige ermittelte Wahrscheinlichkeit - auf Basis der Gewichtsfaktoren - repräsentiert, bereitgestellt werden. Nach der Bewertung können so entweder der wahrscheinlichste Kandidat, d.h. jener der mit der grössten Gewichtung bewertet wurde, automatisch von System ausgewählt, oder - falls mehrere Kandidaten in Frage kommen - die wahrscheinlichsten Kandidaten dem Benutzer zu manuellen Selektion bereitgestellt werden. Erfindungsgemäss kann dabei eine bestimmte Anzahl an Zielpunktkandidaten bereitgestellt werden, insbesondere in Abhängigkeit des jeweiligen Gewichtswerts.

Das Bereitstellen der Zielpunktkandidaten kann dabei derart erfolgen, dass die Zielpunktkandidaten, insbesondere zusammen mit der Information zu den Gewichtswerten, z.B. auf einem Display, insbesondere berührungssensitiven Display, bereitgestellt werden. Dem Benutzer kann somit die Möglichkeit gegeben werden, aus der bereitgestellten Menge möglicher Zielpunkte den gewünschten Zielpunkt auszuwählen, wobei die Angabe hinsichtlich der Wahrscheinlichkeit bzw. Gewichtung unterstützend für die Auswahl des Zielpunkts berücksichtigt werden kann. Ausserdem können die Zielpunktkandidaten zusammen mit der Information die Wahrscheinlichkeit bzw. den Gewichtswert betreffend derart bereitgestellt werden, dass im Rahmen des Verfahrens eine automatische Auswahl eines Zielpunkts aus der Kandidatenmenge getroffen werden kann. Dabei kann z.B. derjenige Zielpunktkandidat automatisch ausgewählt werden, welchem im Verhältnis zu weiteren Zielpunktkandidaten eine grösserer, insbesondere signifikant grösserer, Gewichtungswert zugeordnet ist.

Erfindungsgemäss kann somit im Rahmen des Verfahrens der Zielpunkt aus den bereitgestellten Zielpunktkandidaten und der den dem jeweiligen Zielpunktkandidaten zugeordneten Gewichtswert repräsentierenden Information durch einen Benutzer oder automatisch bestimmt werden. Insbesondere kann derjenige Zielpunktkandidat automatisch als Zielpunkt bestimmt werden, welchem relativ zu weiteren Zielpunktkandidaten ein grösserer Gewichtswert bzw. eine grössere Wahrscheinlichkeit zugeordnet ist. Ferner kann das Bereitstellen des Zielpunkts, der Zielpunktkandidaten und/oder der Information, die den Gewichtswert, der den jeweiligen Zielpunktkandidaten zugeordneten ist, repräsentiert auf einem Display erfolgen.

Weiters können mit dem erfindungsgemässen Verfahren die Zielpunkteigenschaften, die die Grundlage zur Berechnung der Wahrscheinlichkeit bzw. des Gewichtswerts der Zielpunktkandidaten bilden, von Punkteigenschaften, die im erfassten Bild bestimmt werden können, abhängen. Dabei können die Zielpunkteigenschaften jene Eigenschaften bzw. Merkmale aufweisen bzw. können diese den Zielpunktkandidaten zugeteilt sein, die den zugehörigen Zielobjekten zugeordnet sind. Da ein Benutzer versuchen kann einen gewünschten Zielpunkt möglichst genau (in der Bildmitte) anzuzielen, kann beispielsweise dabei die Lage eines möglichen Zielobjekts im Bild die Gewichtung beeinflussen. Weiterhin kann die Zuordnung zu einer bestimmten Zielobjektsklasse sich auf die Gewichtung auswirken. Z.B. kann bei Formen, die einer Bauform eines Retroreflektors oder markanter Objekte in einer Messumgebung (z.B. Gipfelkreuz oder Kirchturm) entsprechen, eine Gewichtung zu Gunsten einer höheren Zielpunktwahrscheinlichkeit erfolgen.

Erfindungsgemäss kann somit die Zielpunkteigenschaft von einer jeweiligen Zielobjektklasse, einer Lage des Zielpunktkandidaten im Bild und/oder einer Reflektivität des jeweiligen Zielobjektkandidaten abhängen.

Ausserdem kann das erfindungsgemässe Verfahren nach dem groben Ausrichten des Vermessungsgeräts automatisch ausgeführt werden, sodass beispielsweise ein Benutzer lediglich einen gewünschten Zielpunkt anzielt und als Ergebnis der Anzielung einen bereits ausgewählten Zielpunkt bereitgestellt bekommt, der insbesondere mit dem gewünschten Zielpunkt übereinstimmt. Zudem kann ein Feinanzielen dieses Zielpunkts mittels Bestimmen der Ablage einer aktuellen Ausrichtung des Vermessungsgeräts zum gewünschten Zielpunkt und Neuausrichtens des Vermessungsgeräts auf den Zielpunkt manuell oder ebenfalls automatisch erfolgen.

Erfindungsgemäss kann somit eine Ablage eines durch die Anzielrichtung definierten Anzielpunkts zum Zielpunkt im Bild bestimmt werden und die Anzielrichtung derart in Abhängigkeit der Ablage ausgerichtet werden, dass der Zielpunkt angezielt wird.

Ein weiterer Aspekt der Erfindung ist ein geodätisches Vermessungsgerät, insbesondere Totalstation oder Theodolit, zur Bereitstellung von Zielpunktkandidaten zur Auswahl eines Zielpunkts mit einer Anzieleinheit, insbesondere einem Ziel-Fernrohr. Die Anzieleinheit ist gegenüber einer Basis des Vermessungsgeräts zur Änderung deren Ausrichtung in zwei Achsen schwenkbar, wobei die Anzieleinheit eine Anzielrichtung definiert und zumindest eine Kamera zur Erfassung eines Bildes im Wesentlichen in Anzielrichtung aufweist. Ferner sind eine Winkelmessfunktionalität zur hochpräzisen Erfassung der Ausrichtung der Anzielrichtung und Ausgabemittel zur Bereitstellung von Information vorgesehen. Zudem weist das Vermessungsgerät eine Steuerungs- und Verarbeitungseinheit auf. In einer Datenbank sind Modelle zu einer Zielobjekterkennung mittels Bildverarbeitung und Koeffizienten zu einer Bewertung von Zielpunkteigenschaften von den Zielpunktkandidaten gespeichert. Weiters weist das Vermessungsgerät eine Suchfunktionalität auf, in deren Rahmen nach einer Erfassung eines Bildes bei Ausführung der Suchfunktionalität durch die Steuerungs- und Verarbeitungseinheit in dem Bild nach den Zielobjektkandidaten in Abhängigkeit eines Übereinstimmungsgrades mit den Modellen gesucht wird, insbesondere mittels eines Klassifizierungsverfahrens, wobei den Zielobjektkandidaten jeweils zumindest ein den Zielobjektkandidaten repräsentierender Punkt als Zielpunktkandidat zugeordnet wird. Ferner werden im Rahmen der Suchfunktionalität die Zielpunktkandidaten zu einer Kandidatenmenge zugeordnet und in Abhängigkeit der Koeffizienten jeweilige Gewichtswerte, insbesondere Wahrscheinlichkeiten, zu den jeweiligen Zielpunktkandidaten abgeleitet und den Zielpunktkandidaten zugeordnet. Zudem werden die Zielpunktkandidaten jeweils zusammen mit einer den dem jeweiligen Zielpunktkandidaten zugeordneten Gewichtswert repräsentierenden Information, insbesondere auf den Ausgabemitteln, bereitgestellt. Ein derartiges erfindungsgemässes Vermessungsgerät kann zudem so ausgebildet sein, dass ein beschriebenes erfindungsgemässes Verfahren durchführbar ist, d.h. das Vermessungsgerät kann die Suchfunktionalität derart bereitstellen, dass bei Ausführung der Suchfunktionalität ein oben beschriebenes erfindungsgemässes Verfahren durchgeführt wird.

Die Erfindung betrifft zudem ein Computerprogrammprodukt mit Programmcode, der auf einem maschinenlesbaren Träger gespeichert ist, zur Durchführung eines erfindungsgemässen Verfahrens zum Bereitstellen von Zielpunktkandidaten zur Auswahl eines Zielpunkts aus den Zielpunktkandidaten, insbesondere wenn das Programm auf einer als Verarbeitungseinheit eines erfindungsgemässen geodätischen Vermessungsgeräts ausgebildeten elektronischen Datenverarbeitungseinheit ausgeführt wird.

Das erfindungsgemässe Verfahren und das erfindungsgemässe Vermessungssystem werden nachfolgend anhand von in den Zeichnungen schematisch dargestellten konkreten Ausführungsbeispielenrein beispielhaft näher beschrieben, wobei auch auf weitere Vorteile der Erfindung eingegangen wird. Im Einzelnen zeigen:
- Fig. 1a-b: eine Ausrichtung einer Anzielrichtung eines Vermessungsgeräts auf einen gewünschten Zielpunkt nach dem Stand der Technik;
- Fig. 2: einen schematischen Ablauf des erfindungsgemässen Verfahrens;
- Fig. 3a-c: eine erfindungsgemässe Detektion von Zielpunktkandidaten in einem erfassten Bild mittels eines Topologiegraphen;
- Fig. 4a-c: eine erfindungsgemässe Form der Klassifizierung von im Bild erkannter Zielpunktkandidaten mittels Merkmalsvektoren und deren Lage im Merkmalsraüm;
- Fig. 5: mit einem erfindungsgemässen Vermessungsgerät erfasste Bilder mit verschiedenen Zielobjektkandidaten mit jeweiligen Zielpunkten;
- Fig. 6: ein erfindungsgemässes Bereitstellen von Zielpunktkandidaten mit jeweiligen zugeordneten Informationen;
- Fig. 7: ein Bestimmen der Ablage eines gewünschten Zielpunkts von einer aktuellen Ausrichtung des Vermessungsgeräts.

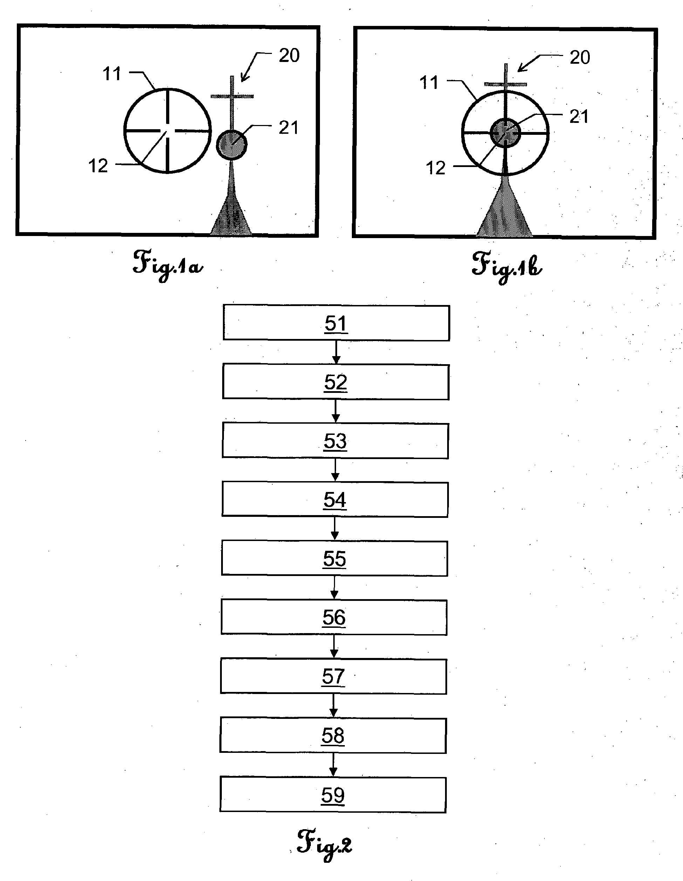

Die Figuren 1a und 1b zeigen einen Ausrichtvorgang für ein Vermessungsgerät nach dem Stand der Technik. Beim Anzielen eines gewünschten Punktes 21 eines Objekts 20, hier dargestellt als Kirchturmspitze, wird die Ausrichtung einer Anzieleinheit eines Vermessungsgeräts, z.B. eines Theodoliten oder einer Totalstation, derart verändert, dass das Zentrum 12 eines die Ausrichtung der Anzielrichtung angebenden Fadenkreuzes 11 mit dem Zielpunkt 21 zusammen fällt (Figur 1b). Dabei kann ein Benutzer mittels eines Diopter den Zielpunkt 21 anvisieren und das Fernrohr durch Verdrehen grob auf das Objekt 20 ausrichten. In einem zweiten Schritt kann der Benutzer durch das Fernrohr blicken und dabei durch Drehen an Feintrieben des Vermessungsgeräts eine genaue Ausrichtung auf den Zielpunkt 21 erreichen.

Dieser Vorgang kann sich in der Praxis als sehr zeitaufwändig erweisen, wobei zudem die Genauigkeit der Anzielung von den Fähigkeiten des Benutzers abhängt.

Die Ausrichtung kann ferner - je nach Gestalt des Zielobjekts - mit einer automatischen Anzielfunktion. (Automatic Target Recognition, ATR) erfolgen, welche eine genaue automatische Ausrichtung des Teleskops z.B. auf einen Reflektor ermöglicht. Nachteilig erweist sich hier, dass die Anzielung nur auf Reflektoren und nicht auf natürliche Zielpunkte 21 funktioniert.

Weiters sind heute Totalstationen mit einer "Tap and Turn"-Funktion erhältlich. Dabei kann mit einer integrierten Kamera ein Live-Bild in Anzielrichtung aufgenommen werden und auf einem Display - am Vermessungsgerät oder einem Controller - dargestellt werden. Der Benutzer kann mittels Stift einen gewünschten Punkt 21 auswählen, auf welchen sich das Teleskop dann automatisch ausrichtet. Die Genauigkeit der Anzielung ist dabei wiederum durch die Fähigkeit des Benutzers limitiert, den Zielpunkt 21 mit dem Stift an der richtigen Stelle auf dem Display zu treffen. Insbesondere bei Messungen zu weit entfernten Zielen und unter Berücksichtigung von Auflösungsgrenzen des Displays kann dieser Vorgang erschwert werden.

Zudem sind Verfahren bekannt, mit denen ein Vermessungsinstrument automatisch und mit hoher Genauigkeit auf ein nicht reflektierendes Ziel ausgerichtet werden kann. Hierbei wird jedoch vorausgesetzt, dass die äussere Gestalt des Zielobjekts 20 bekannt ist, z.B. durch Verwendung von definierten Zieltafeln, die am Zielpunkt 21 für die Vermessung befestigt werden, und in Form eines korrespondierenden Zielmarkenmusters auf dem Vermessungsinstrument gespeichert ist.

Figur 2 zeigt einen schematischen Ablauf eines erfindungsgemässen Verfahrens. Die Erfindung basiert auf der Idee, einen Benutzer beim Anzielen eines gewünschten Zielpunkts 21 zu unterstützen und durch Einsatz von Bildverarbeitungsmethoden eine sehr genaue Anzielung dieses Punktes 21 aus einer Menge an möglichen Zielpunkten zu erreichen.

Dabei kann in einem ersten Schritt 51 das Teleskop des Vermessungsgeräts vom Benutzer grob auf den Zielpunkt 21 ausgerichtet werden. Dies kann durch manuelles Verdrehen des Teleskops oder durch die "Tap and Turn"-Funktion erfolgen. Als nächstes kann mit einer im Vermessungsgerät integrierten Kamera ein Bild im Wesentlichen in Anzielrichtung aufgenommen werden 52, welches mittels Methoden der digitalen Bildverarbeitung hinsichtlich möglicher Zielobjekte analysiert wird. Dabei können im Bild erfasste Strukturen mit Modellen, die im Vermessungsgerät gespeichert sind, abgeglichen werden und so Objekte erkannt und als mögliche Zielobjekte erkannt werden 53.

Für jedes Zielobjekt wird dann zumindest ein möglicher Zielpunkt abgeleitet 54.

Diese möglichen Zielpunkte werden dann in einer Menge zusammengefasst, wobei jedes Element dieser Menge hinsichtlich jener Wahrscheinlichkeit bewertet bzw. gewichtet wird 55, dass es sich bei dem entsprechenden Punkt um den vom Benutzer gewünschten Zielpunkt 21 handelt, der gegebenenfalls automatisch vom System angezielt werden soll.

Die Menge der möglichen Zielpunkte kann in einem nächsten Schritt 56 dann zusammen mit einer Information, insbesondere mit der ermittelten Gewichtung bzw. Wahrscheinlichkeit, z.B. dem Benutzer auf dem Display oder im Vermessungsgerät datenmässig bereitgestellt werden.
Dabei kann dem Benutzer bei ähnlich großen Wahrscheinlichkeiten bzw. Gewichtungen insbesondere eine bestimmte Anzahl der Kandidaten - z.B. nur jene mit den größten Wahrscheinlichkeiten bzw. Gewichtungen - zur manuellen Selektion angeboten werden.

Je nach Verteilung der jeweils zu möglichen Zielpunkten ermittelten Wahrscheinlichkeiten oder Gewichtungen kann dann entweder der Benutzer manuell oder das System automatisch einen Punkt aus der Menge der detektierten und bereitgestellten Punkte auswählen 57, insbesondere jenen mit einer signifikanten Wahrscheinlichkeit oder Gewichtung.

Nach der Auswahl können in einem weiteren Schritt 58 wiederum mittels Methoden der digitalen Bildverarbeitung die Abweichung des ausgewählten Zielpunkts 21 von der aktuellen Anzielrichtung im Bild gemessen und darauf basierend Korrekturwinkel für eine Neuausrichtung der Anzielrichtung bestimmt werden. Diese können an motorgetriebene Antriebe zur Ausrichtung des Fernrohrs gesendet werden und somit zu einer genauen Ausrichtung 59 des Teleskops auf den Zielpunkt 21 dienen.

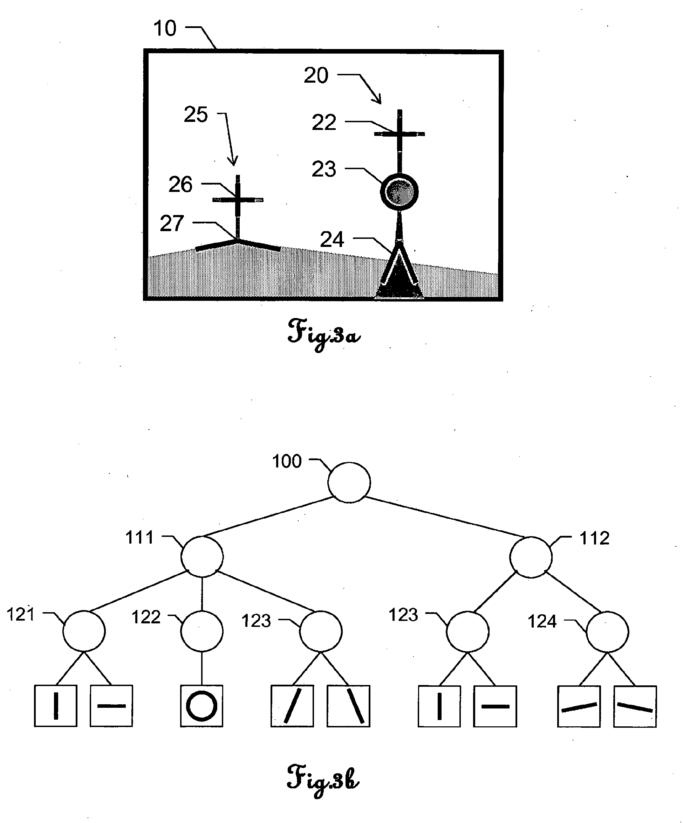

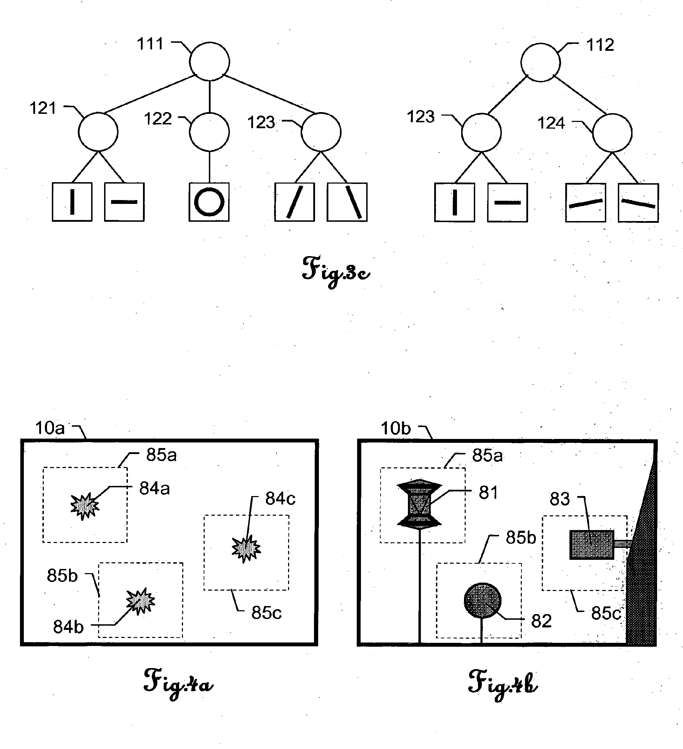

Figur 3a zeigt eine erfindungsgemässe Detektion von möglichen Zielobjektkandidaten 20,25 in einem erfassten Bild 10, wobei im Folgenden eine erfindungsgemässe Klassifizierung der möglichen Zielobjektkandidaten 20,25 in Zusammenschau mit Figuren 3b und 3c beschrieben wird. Figuren 3b und 3c zeigen dabei eine erfindungsgemässe Form der Klassifizierung von Zielobjektkandidaten 20,25 anhand eines Topologiegraphen.

Das aufgenommene Bild 10 kann hinsichtlich möglicher Zielobjekte 20,25 untersucht werden, d.h. es sollen automatisch alle Objekte im Bild ermittelt werden, die als Kandidaten für die automatische Anzielung in Frage kommen. Im gezeigten Fall werden Zielpunkte einer Kirchturmspitze 20 und eines Gipfelkreuzes 25 bestimmt.

Diese Bildanalyse kann auf Basis von Klassifizierungsverfahren erfolgen. In einer ersten Variante kann das Bild nach geometrischen Primitiven, wie z.B. Linien, Kreisen, Ellipsen durchsucht werden. Basierend auf den Nachbarschaftsbeziehungen der detektierten Primitive kann ein Topologiegraph 100 (Figur 3b) des gesamten Bildes aufgebaut werden, wobei die Art, Lage und die Kombination mit benachbarten geometrischen Primitiven berücksichtigt wird. Durch die Kombination von Primitiven können so z.B. Kreuze 22, Kreise 23 oder Spitzen 24 detektiert werden, wobei eine Zusammenschau dieser Objekte eine Kirchturmspitze 20 definieren kann.

Der Topologiegraph 100, der sich aus der Kirchturmspitze 20 und dem Gipfelkreuz 25 in Figur 3a gezeigten ableitet, setzt sich aus den Knoten "Kirchturm" 111 und "Gipfelkreuz" 112 zusammen. Der Knoten "Kirchturm" besteht in einer weiteren Unterteilung aus den Knoten "Kreuz" 121, "Knauf" 122 und "Spitze" 123, und diese wiederum bestehen aus einzelnen geometrischen Primitiven. Zum Auffinden dieser Primitive im Bild können Methoden der digitalen Bildverarbeitung, wie z.B. die Hough Transformation, verwendet werden.

Im System können zu den einzelnen Zielobjektklassen entsprechende Referenz-Graphenstrukturen 111,112 als Referenzmodelle gespeichert sein, welche in dem sich aus dem Bild 10 generierten Topologiegraphen 100 gesucht werden. Figur 3c zeigt eine der Zielobjektklasse "Kirchturm" entsprechende Referenzstruktur 111 und eine der Zielobjektklasse "Gipfelkreuz" entsprechende Referenzstruktur 112.

Im Rahmen der Klassifikation können so die gespeicherten Graphenstrukturen in einem Graphen, der aus dem Bild erzeugt wurde, gesucht werden. Zum Auffinden gewisser topologischer Strukturen im Graphen ist unter anderem die Methode des "Graph Matching" bekannt.

Von den im Bild 10 detektierten möglichen Zielobjekten 20,25 werden mögliche Zielpunkte 22,23,24,26,27 abgeleitet. Unter diesen gilt es nun jenen zu identifizieren, welchen der Benutzer anzielen will. Hierfür können bei einer Vielzahl von Zielpunktkandidaten 22,23,24,26,27 diese einer Bewertung jener Wahrscheinlichkeit unterzogen werden, wonach es sich bei jedem einzelnen im Bild detektierten Zielpunkt 22,23,24,26,27 um den vom Benutzer gewünschten Zielpunkt 21 handelt.

Diese Gewichtung der einzelnen Zielpunktkandidaten kann anhand vordefinierter Gewichtsfaktoren erfolgen, wobei das Produkt dieser einzelnen Gewichtsfaktoren einen Gesamtgewichtswert für den Zielpunktkandidaten ergibt. Da der Benutzer mit der groben Anzielung bereits versuchen kann, den gewünschten Zielpunkt 21 zu treffen, kann ein Gewichtsfaktor der Abstand des Kandidaten 22,23,24,26,27 relativ zur aktuellen Ausrichtung (Fadenkreuz 11) des Vermessungsgeräts sein. D.h. mögliche Zielpunkte in,der Bildmitte können eine höhere Bewertung erhalten als Punkte, die sich am Rand des erfassten Bildes 10 befinden.

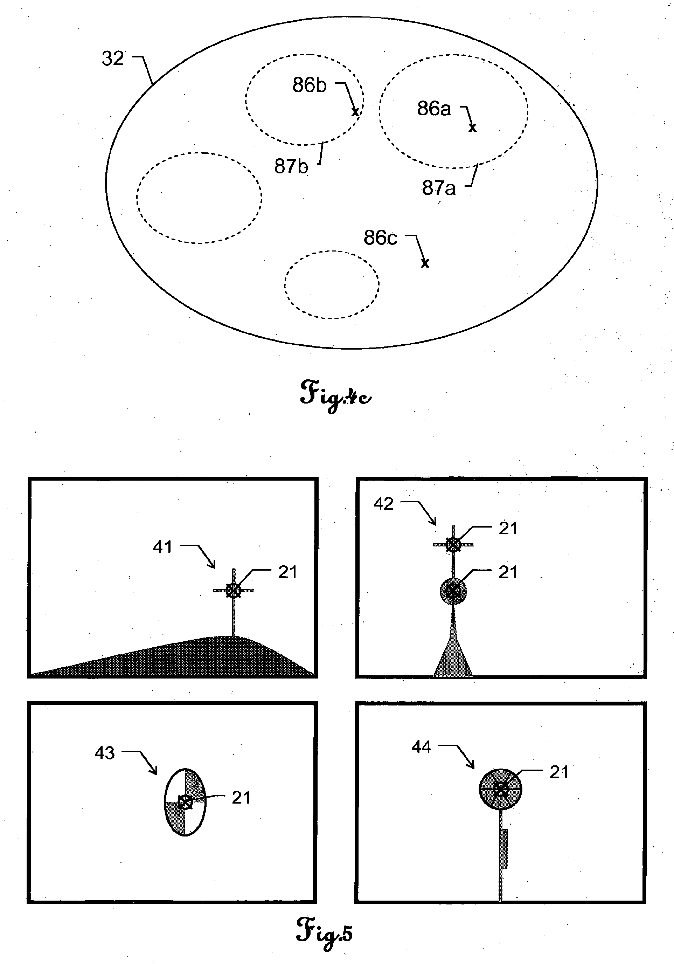

Ein weiterer Gewichtsfaktor kann auf der Häufigkeit des Auftretens eines Zielpunkts 22,23,24,26,27 oder Zielpunkts 21 einer bestimmten Zielobjektklasse zugehörig in der Vermessungspraxis basieren. Dementsprechend repräsentieren, wie in Figur 5 gezeigt, beispielsweise Rundprismen 44 sehr oft gewünschte Zielpunkte 21 und können - sofern diese als Rundprismen 44 erkannt sind - somit einen erhöhten Gewichtswert verursachen und/oder mit einem korrespondierenden stärker gewichteten Koeffizienten versehen sein. Auch Gipfelkreuze 41, Kirchturmspitzen 42 und/oder bestimmte Zielpunktmarkierungen bzw. Zieltafeln 43 können zum einen auf einem erfassten Bild erkannt und zum anderen jeweils mindestens einen Zielobjektkandidaten repräsentieren, wobei z.B. durch eine bestimmte Ausbildung der Kirchturmspitze gleichzeitig zwei Zielpunkte 21 definiert sein können.

Weiters kann auch ein individuelles Verhalten des Benutzers bei einer manuellen Auswahl in die Bestimmung des Gewichtswerts bzw. der Einschlägigkeit inwiefern ein Zielpunktkandidat den gewünschten Zielpunkt darstellt einfliessen. Wenn z.B. der Benutzer sehr oft einen Repräsentanten der Klasse "Kirchturm" und bei diesem das Zentrum des Knaufs auswählt, kann dies vom System erfasst und bei zukünftigen Bewertungen, insbesondere automatisch, berücksichtigt werden.

Ausserdem können aus den Einstellungen des Vermessungsinstruments oder dem laufenden Messprogramm weitere Kriterien für die Gewichtung abgeleitet werden. Ist z.B. ein Distanzmessmodus auf "reflektorlos" gestellt, kann ein möglicher Zielpunkt 22,23,24,26,27 der Klasse "Rundprisma" zugehörig mit einem geringeren Gewichtswert bewertet werden. Ebenso kann im Rahmen eines Messprogramms der Benutzer z.B. aufgefordert werden, einen Polygonpunkt, auf dem ein Reflektor platziert ist, anzumessen. In diesem Fall würde ein möglicher Zielpunkt der Klasse "Rundprisma" zugehörig mit einer entsprechend höheren Wahrscheinlichkeit bewertet werden.

Zur Ableitung des Gewichtswerts kann zudem eine Funktion oder ein Algorithmus definiert werden, welcher anhand mehrerer Gewichtsfaktoren (z.B. Zugehörigkeit des Zielpunktkandidaten 22,23,24,26,27 zu einer bestimmten Zielobjektklasse verbunden mit der Zuordnungswahrscheinlichkeit zu diese Klasse und/oder Abstand im Bild 10 zum Fadenkreuz) ein Gesamtgewichtswert ermittelt, welcher dem Zielpunktkandidaten 22,23,24,26,27zugewiesen werden kann.

Die Figuren 4a und 4b zeigen jeweils ein Bild 10a,10b einer Messumgebung, wobei in Figur 4a ein Bild 10a mit einer ATR-Einheit und in Figur 4b ein Bild 10b mit einer Kamera erfasst wurde. Zudem zeigt Figur 4c einen Merkmalsraum 32 mit aus dem Bild 10b erzeugten Merkmalsvektoren 86a,86b,86c. Mit der ATR wird das Bild 10a aufgenommen und darin die Reflexionen eines durch die ATR emittierten Laserstrahls 84a,84b,84c detektiert. Anhand der Reflexionen 84a,84b,84c kann im ATR-Bild alleine nur schwer beurteilt werden, ob der reflektierte Laser von einem 360°-Prisma 81, einem Rundprisma 82, oder einem anderen Objekt, z.B. einem Rückspiegel 83 eines Fahrzeugs, reflektiert wurde.

In diesem Fall können die Positionen der Laserspots 84a,84b und 84c im Rahmen der Erfindung als "Interest-Points" fungieren und so die Lage der Bildausschnitte 85a, 85b, 85c im aufgenommenen Bild 10b definieren. Aus diesen Bildausschnitten können weiters Merkmalsvektoren 86a,86b,86c (Figur 4c) generiert werden, welche in den Merkmalsraum 32 abgebildet werden.

Im diesem Merkmalsraum 32 sind Regionen 87a,87b definiert, welche den einzelnen Zielobjektklassen entsprechen. Bei der Klassifikation wird anhand der "Position" des Merkmalvektors 86a, 86b, 86c im Merkmalsraum 32 beurteilt, welcher Zielobjektsklasse der entsprechende Bildausschnitt 85a,85b,85c zuzuordnen ist. So kommen hier z.B. die Merkmalsvektoren 86a und 86b in den Regionen 87a und 87b zu liegen, welche z.B. den Zielobjektsklassen "360°-Prisma" und "Rundprisma" entsprechen können. Da der Merkmalsvektor 86c ausserhalb der definierten Regionen liegt, kann dieser keiner Zielobjektklasse zugeordnet werden.

Neben der Zuordnung der einzelnen Bildausschnitte 85a,85b,85c zu den Zielobjektklassen liefert die Klassifikation als Ergebnis auch eine Zuordnungswahrscheinlichkeit, welche die Qualität der Zuordnung beschreibt. Diese kann z.B. von der Position des Merkmalsvektors 86a,86b,86c innerhalb einer Region 87a,87b abgeleitet werden. Liegt ein Vektor 86a mehr oder weniger im Zentrum einer Region, wird dessen Zuordnungswahrscheinlichkeit hoch sein, z.B. 90%, liegt ein Vektor 86b eher am Rand einer Region oder in der näheren Nachbarschaft einer anderen Region, wird die Zuordnungswahrscheinlichkeit niedriger bewertet werden.

Ferner kann dem Benutzer die Möglichkeit geboten werden, selbst Zielobjektklassen zu definieren, zu dem das System automatisch einen zugehörigen Klassifikator generiert bzw. den bestehenden Klassifikator entsprechend anpasst.

Zudem kann die Klassifizierung verbessert werden, indem zusätzliche Informationen in den Prozess einfliessen. Da z.B. die Grösse eines Rundprismas bekannt ist, kann von der Entfernung zum Objekt bei Kenntnis der optischen Abbildungsparameter die Grösse des Prismas im Bild 10b abgeleitet werden. Auch die Grössen von anderen Objekten, z.B. Gipfelkreuzen oder Knäufen auf Kirchtürmen, bewegen sich im Allgemeinen in gewissen Schranken. Die Entfernung zum Objekt kann mittels einer Distanzmessfunktionalität des Vermessungsinstruments ermittelt oder aus der Position der Fokussierlinse der Anzieleinrichtung abgeleitet werden.

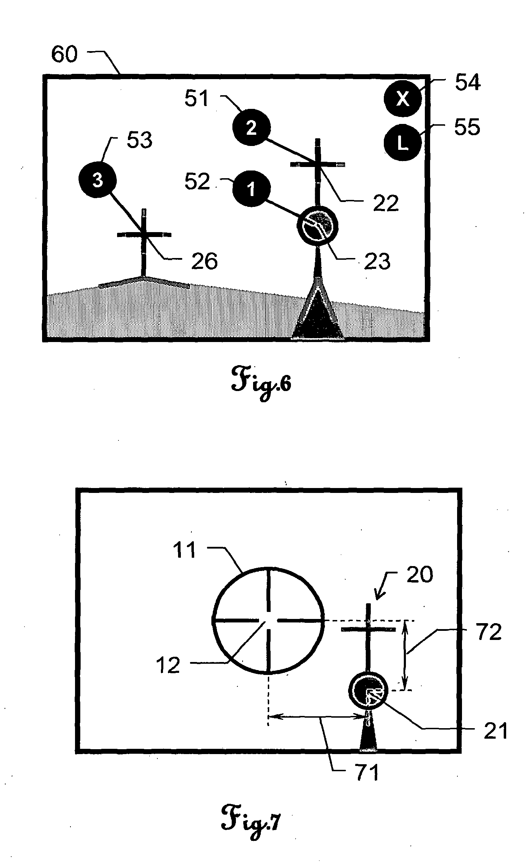

Figur 6 zeigt ein erfindungsgemässes Bereitstellen von Zielpunktkandidaten 22,23,26. Ein erfasstes Bild wurde hierfür entsprechend nach möglichen Zielobjektkandidaten durchsucht, davon die Zielpunktkandidaten 22,23,26 abgeleitet und als mögliche Ziele hinsichtlich ihrer Wahrscheinlichkeit gewichtet und, insbesondere um eines der möglichen Ziele als Zielpunkt auszuwählen, mit Labels 51,52,53 versehen, welche eine Auswahl durch Betätigen der entsprechenden Taste am Bedienfeld oder durch Antippen des Labels 51,52,53 mit einem Stift ermöglichen, bereitgestellt. Wäre der Gewichtswert bzw. Wahrscheinlichkeit eines möglichen Zielpunkts signifikant grösser als bei allen anderen, kann dieser ohne weitere Interaktion des Benutzers vom System ausgewählt werden. Für eine derartige Entscheidung, ob ein Gewichtswert bzw. eine der Wahrscheinlichkeiten signifikant grösser ist als die übrigen Gewichtswerte bzw. Wahrscheinlichkeiten, kann ein vordefinierter Schwellwert benutzt werden, bei dessen Überschreitung eine automatische Auswahl erfolgen kann.

Sind mehrere Kandidaten mit ähnlichen Gewichtswerten vorhanden, kann die Auswahl manuell durch den Benutzer erfolgen. Dazu kann beispielsweise eine vordefinierte Anzahl möglicher Zielpunkte - und zwar z.B. jene mit einem grössten Gewichtswert oder einer grössten Relevanz - im Bild markiert und z.B. mit, einem Marker oder einem Label 51,52,53 versehen werden. Der Benutzer kann somit durch Antippen des Markers im Display 60, beispielsweise mit einem Stift, oder durch Drücken einer dem Marker oder Label entsprechenden Taste am Bedienfeld des Vermessungsinstruments die Auswahl des Zielpunktes durchführen.

Ferner kann im Display 60 eine weitere Auswahl für das Abbrechen 54 der automatischen Anzielfunktion vorhanden sein. Wird diese Auswahl vom Benutzer getroffen, können die Informationen zu den Zielpunktkandidaten 22,23,26 ausgeblendet und das Fadenkreuz der Anzieleinheit eingeblendet werden, sodass der Benutzer auf bekannte Art und Weise einen Zielpunkt manuell anzielen kann.

Ausserdem kann eine Auswahl für das Lernen 55 von neuen Zielpunkten bestehen, wobei der gewünschte Zielpunkt vom Benutzer wiederum manuell angezielt werden kann. Durch Auswahl dieser Funktion kann nach dem Anzielen dem Benutzer die Möglichkeit geboten werden, den angezielten Zielpunkt einer bereits bestehenden Zielobjektklasse zuzuweisen bzw. eine neue benutzerdefinierte Zielobjektklasse zu generieren. Das System generiert aus einem Bildausschnitt definierter Grösse um das Fadenkreuz herum einen Merkmalsvektor und bildet diesen in einem zugehörigen Merkmalsraum ab. Dort kann durch eine Veränderung bestehender Klassengrenzen der Klassifikator an die Berücksichtigung dieses neuen Zielpunkts angepasst werden und somit zukünftig Zielpunkte dieser Art als mögliche Zielpunktkandidaten 22,23,26 erkennen.

Figur 7 zeigt ein Bestimmen der positionellen Ablage eines gewünschten Zielpunkts 21 des Zielobjekts 20 von einer aktuellen Ausrichtung des Vermessungsgeräts. Die Ablage kann hierbei als Positionsdifferenz zwischen einem Zentrum 12 des Fadenkreuzes 11 bzw. zwischen einem durch die Ausrichtung der Anzieleinheit definierten Anzielpunkt im Bild und dem gewünschten bzw. ausgewählten Zielpunkt 21 verstanden werden. Die Ablage zwischen den Punkten kann mittels Bildverarbeitung in zwei Richtungen 71,72 bestimmt werden, wobei die jeweilige Richtungsablage 71,72 jeweils einen Abstand zwischen dem gewünschten Zielpunkt 21 und dem Fadenkreuzzentrum 12 angeben kann.

In Abhängigkeit der optischen Parameter der Anzieleinheit, insbesondere des Fernrohrs, (z.B. Brennweite) und der integrierten Kamera (z.B. Pixelgrösse) kann die Ablage weiters in Korrekturwinkel zur Neuausrichtung der Anzieleinheit bzw. des Vermessungsgeräts umgerechnet werden. Diese Korrekturen können an die motorisierten Schwenkantriebe der Anzieleinheit übermittelt werden und somit zur präzisen Neuausrichtung der Anzieleinheit auf den gewünschten Zielpunkt 21 dienen, wobei diese Ausrichtung automatisch gesteuert durchgeführt werden kann.

Ausserdem kann die bestimmte Ablage 71,72 auf dem Display 60 angezeigt werden. Somit kann ein Benutzer - alternativ zur automatischen Ausrichtung - die Neuausrichtung der Anzieleinheit manuell ausführen, indem dieser Feintriebe der Anzieleinheit derart verstellt, dass die Positionsdifferenz null wird. Dabei können die Richtungsablagen 71,72 auf dem Display 60 fortlaufend, insbesondere kontinuierlich, aktualisiert werden und dem Benutzer somit einen Ausrichtungsfortschritt anzeigen.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren und Vorrichtungen zur Anzielung von Zielpunkten und mit Vermessungsgeräten des Stands der Technik kombiniert werden.

## Patentansprüche

1. Verfahren zum Bereitstellen von eine Kandidatenmenge bildenden Zielpunktkandidaten (22,23,24,26,27) zur Auswahl eines Zielpunkts (21) aus der Kandidatenmenge mit einem geodätischen Vermessungsgerät, wobei das Vermessungsgerät eine eine Anzielrichtung definierende Anzieleinheit und eine im Wesentlichen in Anzielrichtung ausgerichtete Kamera aufweist, mit
• grobem Ausrichten des Vermessungsgeräts auf den Zielpunkt (21) und
• Erfassen eines Bildes (10,10b) in Anzielrichtung,
• ein Suchvorgang nach bestimmten Zielobjektkandidaten (20,25) im erfassten Bild (10,10b) mittels Bildverarbeiten erfolgt, insbesondere mittels eines Klassifizierungsverfahrens, wobei
□ der Suchvorgang auf Basis vordefinierter Modelle erfolgt und
□ den Zielobjektkandidaten (20,25) jeweils zumindest ein den jeweiligen Zielobjektkandidaten (20,25) repräsentierender Punkt als Zielpunktkandidat (22,23,24,26,27) zugeordnet wird,
**dadurch gekennzeichnet, dass**
• • die Zielpunktkandidaten (22,23,24,26,27) zu der Kandidatenmenge zugeordnet werden,
• zu den Zielpunktkandidaten (22,23,24,26,27) jeweils ein Gewichtswert, insbesondere eine Wahrscheinlichkeit, in Abhängigkeit von mindestens einer Ausprägung von einer vorbestimmten Zielpunkteigenschaft des Zielpunktkandidaten (22,23,24,26,27) abgeleitet und zugeordnet wird und
• die Zielpunktkandidaten (22,23,24,26,27) der Kandidatenmenge jeweils zusammen mit einer den dem jeweiligen Zielpunktkandidaten (22,23,24,26,27) zugeordneten Gewichtswert repräsentierenden Information bereitgestellt werden.

2. Verfahren nach Anspruch 1
**dadurch gekennzeichnet, dass**
der Suchvorgang in Abhängigkeit eines Bewertens, insbesondere mittels Klassifizierens, eines Zielobjektmerkmals des jeweiligen Zielobjektkandidaten (20,25), insbesondere Typ und/oder Umgebung des Objekts und/oder Grauwert, Grauwertgradient und/oder Histogramm einer Zielpunktumgebung und/oder geometrischer Primitive und/oder deren Nachbarschaftsbeziehungen, erfolgt.

3. Verfahren nach Anspruch 2
**dadurch gekennzeichnet, dass**
das Bewerten des Zielobjektmerkmals in Abhängigkeit von die Zielobjektkandidaten (20,25) repräsentierenden und/oder zielobjektähnlichen Bildern (10,10b), insbesondere Bildausschnitten, erfolgt.

4. Verfahren nach Anspruch 2 oder 3
**dadurch gekennzeichnet, dass**
eine Merkmalsausprägung des Zielobjektmerkmals und ein Ausprägungskoeffizient bestimmt werden, insbesondere wobei die Merkmalsausprägung und der Ausprägungskoeffizient in Abhängigkeit einer Lage eines jeweiligen Merkmalvektors (86a,86b,86c) in einem Merkmalsraum (32) bestimmt werden, insbesondere wobei eine Zuordnungswahrscheinlichkeit bestimmt wird.

5. Verfahren nach einem der Ansprüche 1 bis 4
**dadurch gekennzeichnet, dass**
eine bestimmte Anzahl an Zielpunktkandidaten (22,23,24,26,27) bereitgestellt wird, insbesondere in Abhängigkeit des jeweiligen Gewichtswerts.

6. Verfahren nach einem der Ansprüche 1 bis 5
**dadurch gekennzeichnet, dass**
der Zielpunkt (21) aus den bereitgestellten Zielpunktkandidaten (22,23,24,26,27) und der den dem jeweiligen Zielpunktkandidaten (22,23,24,26,27) zugeordneten Gewichtswert repräsentierenden Information durch einen Benutzer oder automatisch bestimmt wird.

7. Verfahren nach einem der Ansprüche 1 bis 6
**dadurch gekennzeichnet, dass**
derjenige Zielpunktkandidat (22,23,24,26,27) automatisch als Zielpunkt (21) bestimmt wird, welchem relativ zu weiteren Zielpunktkandidaten (22,23,24,26,27) ein grösserer Gewichtswert zugeordnet ist.

8. Verfahren nach einem der Ansprüche 1 bis 7
**dadurch gekennzeichnet, dass**
das Bereitstellen des Zielpunkts (21), der Zielpunktkandidaten (22,23,24,26,27) und/oder der den dem jeweiligen Zielpunktkandidaten (22,23,24,26,27) zugeordneten Gewichtswert repräsentierenden Information auf einem Display erfolgt.

9. Verfahren nach einem der Ansprüche 1 bis 8
**dadurch gekennzeichnet, dass**
die Zielpunkteigenschaft von einer jeweiligen Zielobjektklasse, einer Lage des Zielpunktkandidaten (22,23,24,26,27) im Bild und/oder einer Reflektivität des jeweiligen Zielobjektkandidaten (20,25) abhängt.

10. Verfahren nach einem der Ansprüche 1 bis 9
**dadurch gekennzeichnet, dass**
eine Ablage (71,72) eines durch die Anzielrichtung definierten Anzielpunkts zum Zielpunkt (21) im Bild (10,10b) bestimmt wird und die Anzielrichtung derart in Abhängigkeit der Ablage (71,72) ausgerichtet wird, dass der Zielpunkt (21) angezielt wird.

11. Verfahren nach einem der Ansprüche 1 bis 10
**dadurch gekennzeichnet, dass**
das Verfahren nach dem groben Ausrichten des Vermessungsgeräts automatisch ausgeführt wird.

12. Geodätisches Vermessungsgerät, insbesondere Totalstation oder Theodolit, zur Bereitstellung von Zielpunktkandidaten (22,23,24,26,27) zur Auswahl eines Zielpunkts (21) mit
• einer Anzieleinheit, insbesondere Ziel-Fernrohr, wobei die Anzieleinheit
□ gegenüber einer Basis des Vermessungsgeräts zur Änderung deren Ausrichtung in zwei Achsen schwenkbar ist,
□ eine Anzielrichtung definiert und
□ zumindest eine Kamera zur Erfassung eines Bildes (10,10b) im Wesentlichen in Anzielrichtung aufweist,
• Winkelmessfunktionalität zur hochpräzisen Erfassung der Ausrichtung der Anzielrichtung,
• Ausgabemitteln zur Bereitstellung von Information und
• einer Steuerungs- und Verarbeitungseinheit,
• in einer Datenbank Modelle zu einer Zielobjekterkennung mittels Bildverarbeitung und Koeffizienten zu einer Bewertung von Zielpunkteigenschaften der Zielpunktkandidaten (22,23,24,26,27) gespeichert sind und
**dadurch gekennzeichnet, dass**
• das Vermessungsgerät eine Suchfunktionalität aufweist, in deren Rahmen nach einer Erfassung eines Bildes (10,10b) bei Ausführung der Suchfunktionalität durch die Steuerungs- und Verarbeitungseinheit
□ in dem Bild (10,10b) nach den Zielobjektkandidaten (20,25) in Abhängigkeit eines Übereinstimmungsgrades mit den Modellen gesucht wird, insbesondere mittels eines Klassifizierungsverfahrens, wobei den Zielobjektkandidaten (20,25) jeweils zumindest ein den Zielobjektkandidaten (20,25) repräsentierender Punkt als Zielpunktkandidat (22,23,24,26,27) zugeordnet wird,
□ die Zielpunktkandidaten (22,23,24,26,27) zu einer Kandidatenmenge zugeordnet werden,
□ in Abhängigkeit der Koeffizienten jeweilige Gewichtswerte, insbesondere Wahrscheinlichkeiten, zu den jeweiligen Zielpunktkandidaten (22,23,24,26,27) abgeleitet und den Zielpunktkandidaten (22,23,24,26,27) zugeordnet werden und
□ die Zielpunktkandidaten (22,23,24,26,27) jeweils zusammen mit einer den dem jeweiligen Zielpunktkandidaten (22,23,24,26,27) zugeordneten Gewichtswert repräsentierenden Information (51,52,53), insbesondere auf den Ausgabemitteln, bereitgestellt werden.

13. Geodätisches Vermessungsgerät nach Anspruch 12
**dadurch gekennzeichnet, dass**
das Vermessungsgerät die Suchfunktionalität derart bereitstellt, dass bei Ausführung der Suchfunktionalität ein Verfahren nach einem der Ansprüche 1 bis 11 durchgeführt wird.

14. Computerprogrammprodukt mit Programmcode, der auf einem maschinenlesbaren Träger gespeichert ist, zur Durchführung des Verfahrens zum Bereitstellen von Zielpunktkandidaten (22,23,24,26,27) zur Auswahl eines Zielpunkts (21) nach einem der Ansprüche 1 bis 11, insbesondere wenn das Programm auf einer als Verarbeitungseinheit des geodätischen Vermessungsgeräts nach einem der Ansprüche 12 oder 13 ausgebildeten elektronischen Datenverarbeitungseinheit ausgeführt wird.

## Claims

1. A method for providing target point candidates (22, 23, 24, 26, 27) that form a candidate set for selecting a target point (21) from the candidate set by means of a geodetic measuring device, wherein the measuring device has a targeting unit defining a targeting direction and a camera aligned substantially in the targeting direction, comprising
• coarsely aligning the measuring device with the target point (21) and
• detecting an image (10, 10b) in the targeting direction,
• a process of searching for specific target object candidates (20, 25) in the detected image (10, 10b) being effected by means of image processing, in particular by means of a classification method, wherein
□ the search process is effected on the basis of predefined models and
□ the target object candidates (20, 25) are respectively assigned at least one point representing the respective target object candidate (20, 25) as target point candidate (22, 23, 24, 26, 27),
**characterized in that**
• the target point candidates (22, 23, 24, 26, 27) are assigned to the candidate set,
• a respective weight value, more particularly a probability, depending on at least one embodiment of a predetermined target point property of the target point candidate (22, 23, 24, 26, 27), is derived and assigned to the target point candidates (22, 23, 24, 26, 27), and
• the target point candidates (22, 23, 24, 26, 27) of the candidate set are respectively provided together with an information item representing the weight value assigned to the respective target point candidate (22, 23, 24, 26, 27).

2. The method as claimed in claim 1,
**characterized in that**
the search process is effected depending on a rating, in particular by means of classification, of a target object feature of the respective target object candidate (20, 25), in particular type and/or environment of the object and/or gray-scale value, gray-scale value gradient and/or histogram of a target point environment and/or geometrical primitives and/or the neighborhood relationships thereof.

3. The method as claimed in claim 2,
**characterized in that**
the rating of the target object feature is effected depending on images (10, 10b), in particular image excerpts, that represent the target object candidates (20, 25) and/or are similar to the target object.

4. The method as claimed in claim 2 or 3,
**characterized in that**
a feature embodiment of the target object feature and an embodiment coefficient are determined, in particular wherein the feature embodiment and the embodiment coefficient are determined depending on a position of a respective feature vector (86a, 86b, 86c) in a feature space (32), in particular wherein an assignment probability is determined.

5. The method as claimed in any one of claims 1 to 4,
**characterized in that**
a specific number of target point candidates (22, 23, 24, 26, 27) are provided, in particular depending on the respective weight value.

6. The method as claimed in any one of claims 1 to 5,
**characterized in that**
the target point (21) is determined from the provided target point candidates (22, 23, 24, 26, 27) and the information item representing the weight value assigned to the respective target point candidate (22, 23, 24, 26, 27) by a user or automatically.

7. The method as claimed in any one of claims 1 to 6,
**characterized in that**
that target point candidate (22, 23, 24, 26, 27) which is assigned a larger weight value relative to further target point candidates (22, 23, 24, 26, 27) is automatically determined as the target point (21).

8. The method as claimed in any one of claims 1 to 7,
**characterized in that**
providing the target point (21), the target point candidates (22, 23, 24, 26, 27) and/or the information item representing the weight value assigned to the respective target point candidate (22, 23, 24, 26, 27) takes place on a display.

9. The method as claimed in any one of claims 1 to 8,
**characterized in that**
the target point property is dependent on a respective target object class, a position of the target point candidate (22, 23, 24, 26, 27) in the image and/or a reflectivity of the respective target object candidate (20, 25).

10. The method as claimed in any one of claims 1 to 9,
**characterized in that**
an offset (71, 72) of a targeting point defined by the targeting direction with respect to the target point (21) is determined in the image (10, 10b) and the targeting direction is aligned depending on the offset (71, 72) in such a way that the target point (21) is targeted.

11. The method as claimed in any one of claims 1 to 10,
**characterized in that**
the method is performed automatically after the measuring device has been coarsely aligned.

12. A geodetic measuring device, in particular total station or theodolite, for providing target point candidates (22, 23, 24, 26, 27) for selecting a target point (21), comprising
• a targeting unit, in particular telescopic sight, wherein the targeting unit
□ is pivotable relative to a base of the measuring device for changing the alignment thereof in two axes,
□ defines a targeting direction and
□ has at least one camera for detecting an image (10, 10b) substantially in the targeting direction,
• angle measuring functionality for highly precisely detecting the alignment of the targeting direction,
• output means for providing information and
• a control and processing unit,
• wherein models for target object recognition by means of image processing and coefficients for a rating of target point properties of the target point candidates (22, 23, 24, 26, 27) are stored in a database, and
• **characterized in that**
• the measuring device has a search functionality in the context of which after detection of an image (10, 10b) during performance of the search functionality by the control and processing unit
□ in the image (10, 10b) a search is made for the target object candidates (20, 25) depending on a degree of correspondence with the models, in particular by means of a classification method, wherein the target object candidates (20, 25) are respectively assigned at least one point representing the target object candidate (20, 25) as target point candidate (22, 23, 24, 26, 27),
□ the target point candidates (22, 23, 24, 26, 27) are assigned to a candidate set,
□ depending on the coefficients respective weight values, in particular probabilities, are derived for the respective target point candidates (22, 23, 24, 26, 27) and are assigned to the target point candidates (22, 23, 24, 26, 27), and
□ the target point candidates (22, 23, 24, 26, 27) are respectively provided together with an information item (51, 52, 53) representing the weight value assigned to the respective target point candidate (22, 23, 24, 26, 27), in particular on the output means.

13. The geodetic measuring device as claimed in claim 12,
**characterized in that**
the measuring device provides the search functionality in such a way that a method as claimed in any one of claims 1 to 11 is carried out during the performance of the search functionality.

14. A computer program product comprising program code stored on a machine-readable carrier, for carrying out the method for providing target point candidates (22, 23, 24, 26, 27) for selecting a target point (21) as claimed in any one of claims 1 to 11, particularly when the program is executed on an electronic data processing unit designed as a processing unit of the geodetic measuring device as claimed in either one of claims 12 and 13.

## Revendications

1. Procédé de préparation de candidats de points cible (22, 23, 24, 26, 27) formant une quantité de candidats pour la sélection d'un point cible (21) dans la quantité de candidats avec un appareil de mesure géodésique, cependant que l'appareil de mesure présente une unité de ciblage qui définit une direction de ciblage et une caméra orientée substantiellement dans la direction de ciblage avec
• orientation grossière de l'appareil de mesure sur le point cible (21) et
• détection d'une image (10, 10b) dans la direction de ciblage,
• une opération de recherche de certains candidats d'objet cible (20, 25) est effectuée dans l'image détectée (10, 10b) au moyen de traitement de l'image, en particulier au moyen d'un procédé de classification, cependant que
□ l'opération de recherche est effectuée sur la base de modèles prédéfinis et
□ respectivement au moins un point qui représente le candidat d'objet cible respectif (20, 25) est associé en tant que candidat de point cible (22, 23, 24, 26, 27) aux candidats d'objet cible respectifs (20, 25),
**caractérisé en ce que**
• les candidats de points cible (22, 23, 24, 26, 27) sont associés à la quantité de candidats,
• respectivement une valeur pondérale, en particulier une probabilité, est dérivée et associée aux candidats de point cible (22, 23, 24, 26, 27) en fonction d'au moins une expression d'une propriété prédéfinie de point cible du candidat de point cible (22, 23, 24, 26, 27) et
• les candidats de points cible (22, 23, 24, 26, 27) de la quantité de candidats sont mis à disposition respectivement ensemble avec une information qui représente la valeur pondérale associée au candidat de point cible respectif (22, 23, 24, 26, 27).

2. Procédé selon la revendication 1, **caractérisé en ce que** l'opération de recherche est effectuée en fonction d'une évaluation, en particulier au moyen d'une classification, d'une caractéristique d'objet cible du candidat d'objet cible respectif (20, 25), en particulier le type et/ou l'environnement de l'objet et/ou la valeur de gris, le gradient de valeur de gris et/ou l'histogramme d'un environnement de point cible et/ou d'une primitive géométrique et/ou de ses relations de voisinage.

3. Procédé selon la revendication 2, **caractérisé en ce que** l'évaluation de la caractéristique d'objet cible est effectuée en fonction d'images (10, 10b) qui représentent les candidats d'objet cible (20, 25) et/ou d'images semblables à l'objet cible, en particulier de sections d'image.

4. Procédé selon la revendication 2 ou 3, **caractérisé en ce qu'**une expression de caractéristique de la caractéristique d'objet cible et un coefficient de expression sont déterminés, en particulier cependant que l'expression de caractéristique et le coefficient d'expression sont déterminés en fonction d'une position d'un vecteur de caractéristique respectif (86a, 86b, 86c) dans un espace de caractéristique (32), en particulier cependant qu'une probabilité de correspondance est déterminée.

5. Procédé selon l'une des revendications 1 à 4, **caractérisé en ce qu'**un certain nombre de candidats de points cible (22, 23, 24, 26, 27) est mis à disposition, en particulier en fonction de la valeur pondérale respective.

6. Procédé selon l'une des revendications 1 à 5, **caractérisé en ce que** le point cible (21) est déterminé par un utilisateur ou automatiquement à partir des candidats de points cible mis à disposition (22, 23, 24, 26, 27) et de l'information qui représente la valeur pondérale associée au candidat de point cible respectif (22, 23, 24, 26, 27).

7. Procédé selon l'une des revendications 1 à 6, **caractérisé en ce que** le candidat de point cible (22, 23, 24, 26, 27) auquel une plus grande valeur pondérale est associée par rapport aux autres candidats de points cible (22, 23, 24, 26, 27) est déterminé automatiquement comme point cible (21).

8. Procédé selon l'une des revendications 1 à 7, **caractérisé en ce que** la mise à disposition du point cible (21), des candidats de points cible (22, 23, 24, 26, 27) et/ou de l'information qui représente la valeur pondérale associée au candidat de point cible respectif (22, 23, 24, 26, 27) est effectuée sur un afficheur.

9. Procédé selon l'une des revendications 1 à 8, **caractérisé en ce que** la propriété de point cible dépend d'une classe d'objet cible respective, d'une position du candidat de point cible (22, 23, 24, 26, 27) dans l'image et/ou d'une réflectivité du candidat d'objet cible respectif (20, 25).

10. Procédé selon l'une des revendications 1 à 9, **caractérisé en ce qu'**un stockage (71, 72) d'un point de ciblage défini par la direction de ciblage par rapport au point cible (21) est déterminé dans l'image et que la direction de ciblage est orientée en fonction du stockage (71, 72) de manière telle que le point cible (21) est ciblé.

11. Procédé selon l'une des revendications 1 à 10, **caractérisé en ce que** le procédé est réalisé automatiquement après l'orientation grossière de l'appareil de mesure.

12. Appareil de mesure géodésique, en particulier station totale ou théodolite, pour la mise à disposition de candidats de points cible (22, 23, 24, 26, 27) pour la sélection d'un point cible (21) avec
• une unité de ciblage, en particulier une lunette de visée, cependant que l'unité de ciblage
□ est pivotante par rapport à une base de l'appareil de mesure pour modifier son orientation dans deux axes,
□ une direction de ciblage est définie et
□ présente au moins une caméra pour la détection d'une image (10, 10b) substantiellement dans la direction de ciblage,
• fonctionnalité de mesure d'angle pour la détection extrêmement précise de l'orientation de la direction de ciblage,
• des moyens de sortie pour la mise à disposition d'informations et
• une unité de commande et de traitement,
• des modèles sont mémorisés dans une banque de données pour une reconnaissance d'objet cible au moyen de traitement d'image et de coefficients pour une évaluation de propriétés de point cible des candidats de point cible (22, 23, 24, 26, 27) et
**caractérisé en ce que**
• l'appareil de mesure présente une fonctionnalité de recherche dans le cadre de laquelle, après une détection d'une image (190, 10b) lors de la réalisation de la fonctionnalité de recherche par l'unité de commande et de traitement,
□ une recherche des candidats d'objet cible (20, 25) est effectuée dans l'image (10, 10b) en fonction d'un degré de correspondance avec les modèles, en particulier au moyen d'un procédé de classification, cependant que respectivement au moins un point qui représente le candidat d'objet cible (20, 25) est associé aux candidats d'objet cible (20, 25) en tant que candidat de point cible (22, 23, 24, 26, 27),
□ les candidats de point cible (22, 23, 24, 26, 27) sont associés à une quantité de candidats,
□ des valeurs pondérales respectives des candidats de point cible respectifs (22, 23, 24, 26, 27), en particulier des probabilités, sont dérivées pour les candidats de point cible (22, 23, 24, 26, 27) en fonction des coefficients et associées aux candidats de point cible (22, 23,24,26,27)et
□ les candidats de point cible (22, 23, 24, 26, 27) sont mis à disposition respectivement ensemble avec une information (51, 52, 53) qui représente la valeur pondérale associée au candidat de point cible respectif (22, 23, 24, 26, 27), en particulier sur les moyens de sortie.

13. Appareil de mesure géodésique selon la revendication 12, **caractérisé en ce que** l'appareil de mesure met à disposition la fonctionnalité de recherche de telle manière qu'un procédé selon l'une des revendications 1 à 11 est exécuté lors de la réalisation de la fonctionnalité de recherche.

14. Produit de programme d'ordinateur avec code de programme qui est mémorisé sur un support qui peut être lu par une machine pour l'exécution du procédé pour mettre à disposition des candidats de point cible (22, 23, 24, 26, 27) pour la sélection d'un point cible (21) selon l'une des revendications 1 à 11, en particulier lorsque le programme est réalisé sur une unité de traitement électronique de données configurée en tant qu'unité de traitement de l'appareil de mesure géodésique selon l'une des revendications 12 ou 13.
